# EUROPEAN PATENT APPLICATION

(11) **EP 1 079 640 A1**
(43) Date of publication of application: **28.02.2001**
(21) Application number: 99650075.7
(22) Date of filing: 26.08.1999
(51) Int. Cl.: H04Q 3/00, H04M 3/36

(54) **Congestion control system for mass calling events**

(71) Applicant: L.M. Ericsson Limited, County Westmeath (IE)
(72) Inventor: Vaughan, Patrick Joseph, Lisdoonvarna, County Clare (IE)
(74) Representative: O'Connor, Donal Henry

(57) **Abstract**

A dynamic destination overload control system for mass unannounced calling caused by random events in a communication network. The control system has a plurality of demand entities (30-34) each having its own unique identity. Ineffective traffic or potential ineffective traffic downstream in the network is monitored and recorded. When the ineffective traffic reaches a certain level for a particular demand entity a control response is initiated in real time. A feature of the present system is that the control response specifies the simultaneous number of calls towards the demand entity. The demand entities are assigned a unique identity in a hierarchical fashion so that priority is allocated to particular demand entities, such as a hospital. The recorded ineffective traffic information can be used in other applications in the network.

## Description

### Introduction

### Technical Field of the Invention

The present invention relates to a method of controlling randomly recurring call events in a communications network having a plurality of demand entities, each having a unique demand identity, namely, a dynamic destination overload control (DDOC) system.

### Description of Related Art

Traffic management is becoming increasingly a problem for communications in public and data networks in both public switching, for example, asynchronous transfer mode (ATM) and internet protocol (IP) technologies or any other switching protocol. Stimulated unannounced mass calling events arise particularly in certain known demand entities, for example a radio station running a competition in which listeners must reply to a particular promotion, quiz or indeed simply to give their opinions in relation to a particular programme taking place. Other situations where they may occur for example is with a public utility during some natural disaster, or indeed for example to a whole country where an earthquake or the like disaster has occurred. The problem with these events is that they are normally characterised by very large volumes of calls that are concentrated in relatively short time intervals. This is particularly the case, for example, with the calling of radio stations where the calls tend to take place during commercial breaks in response to advertisements. This can lead to focussed overload in the network whereby the experienced traffic volumes destined for the identified destinations greatly exceed the engineered traffic capabilities for the switches of those destinations.

Another mass calling event that can cause problems is the downloading of information for example from lottery or gaming machine terminals to a master host where the mass calling occurs usually in the hour before the lottery draw, the horse race or other sporting event takes place. It can be said to be predictable for some such events, but is not entirely predictable.

It is vitally important to control the affects of such stimulated events on the network, while maintaining network occupancy to the engineered level.

At the present moment the current method of controlling mass calling situations involves the use of network intelligence solutions whereby the demand identity is known in advance and traffic calming procedures are implemented to limit the amount of traffic which is allowed to proceed to the previously identified demand entity. Unfortunately, there are many situations where mass calling events are not known in advance and the network is vulnerable to the consequences of mass calling. The problem is that the solutions available are generally reactive and only apply traffic calming after the mass calling event has affected the network operation.

The problem is in many situations the mass calling event is not known in advance and thus will hit a totally unprotected network and render the network in a state whereby the engineered traffic calming capacity is overwhelmed with traffic to a single destination or indeed to a set of destinations. It is almost impossible to successfully terminate calls to the particular demand entity causing general overload on the network. This can have severe financial implications for the network operator because there can be rapidly spreading network congestion, most notably at the transit network level which is usually high revenue generating traffic.

U.S. Patent No. 5,295,183 (Northern Telecom Limited) discloses a congestion control system. The control system receives an indication from the destination node that a number appears to be congested, then works backwards through the analysis to find which number should be restricted from the originating exchange. However, there are difficulties in working backwards through the analysis of a network in which it is difficult to find which number should be restricted within the originating exchange and is dependent on the routing structure. Also this control system has to monitor all the entities or subscribers to the network at any time in order to control unannounced mass calls which is computationally very wasteful on the network resources. The monitoring of the network is based on statistical calculations. This leads to the problem that real-time control of the network is hard to attain because in order to provide smooth and accurate control the cycle time is reduced the result being that the statistical calculations become less accurate. This congestion control system can only be considered as an enhancement of a dynamic call routing system, and as such can only be considered in association with one particular implementation of traffic routing in a telecommunications network.

As well as being an ineffective use of network resources, the service level to the customer is severely limited. Thus, one or more demand entity having a traffic overload can cause difficulties for all the other demand entities being serviced by a particular network, which other demand entities would be capable of accepting calls or making them.

In this specification the term "demand entity" is analogous with the ITU-T definition of "destination" as described in ITU-T E410(10/96). Thus in this specification the term "demand entity" relates to that particular destination and "demand identity" relates to the actual identification of that demand entity or destination, though in this specification the term identity and entity are used somewhat interchangeably.

### Summary

The present invention is directed towards providing a dynamic traffic calming for unannounced mass calling events in public networks in real time.

According to the invention there is provided a method of controlling randomly recurring call events in a communications network having a plurality of demand entities, each having a unique demand identity comprising the steps of:
continuously monitoring the level of ineffective traffic for each demand entity; and
initiating a traffic control response when the level of ineffective traffic for a demand entity exceeds a preset limit.

Preferably the traffic control response specifies the simultaneous number of calls towards the demand entity.

In one embodiment of the invention the simultaneous number of calls is measured in Erlang.

Preferably a dynamic traffic control response is exerted over time, matching a traffic profile of that demand identity.

In another embodiment of the invention the traffic control response of the demand entity is carried out in the network, the network in turn has a similar control operation performed on it by other networks using the networks unique demand identity with respect to another network.

Preferably the method further comprises the steps of assigning priority, to high-level demand entities (30-34) and monitoring first the high-level demand entities (30-34) for the level of ineffective traffic.

In a further embodiment when the level of ineffective traffic for a particular demand entity reaches a predefined level, a restriction module controls the rate at which calls are allocated to that demand entity.

Preferably the monitoring means comprising storing event data obtained from the monitoring and allocating the event data for use in other applications.

### Brief Description of the Drawings

The invention will be more clearly understood from the following description of an embodiment thereof, given by way of example only with reference to the accompanying drawings in which:
Fig. 1 is a schematic of a telephone switching network;
Fig. 2 is a flow chart of the method of controlling randomly occurring call events in a communications network according to the present invention; and
Fig. 3 is a real time block diagram layer of a switching node according to the present invention.

### Detailed Description

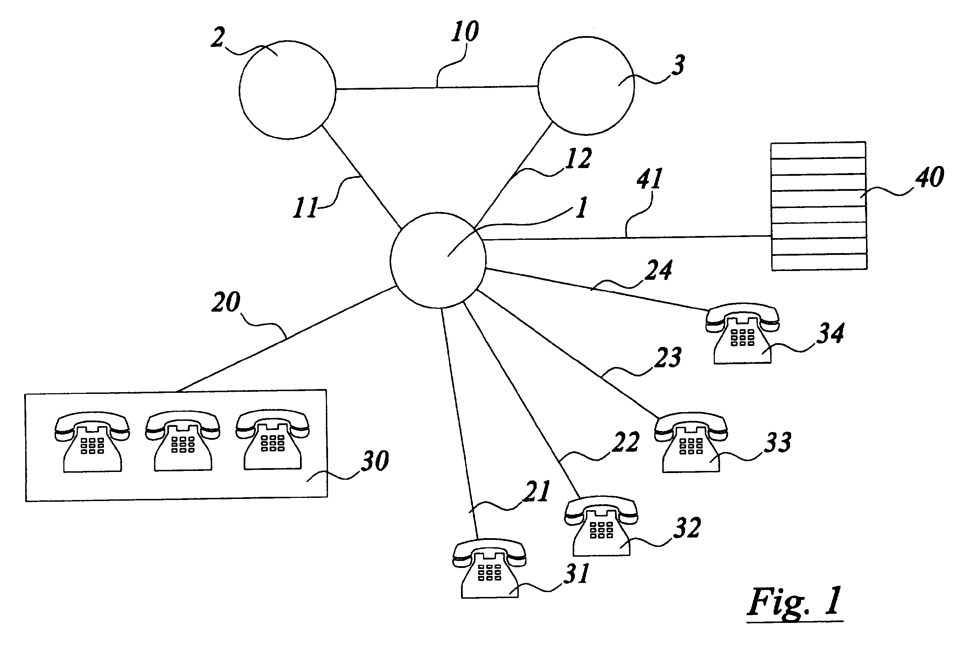

Referring to the drawings and initially to Fig. 1 there is illustrated part of a network in which a switch 1 is connected to other switches 2 and 3 by communication lines 10, 11 and 12. The switch 1 is connected by further communication lines 20, 21, 22, 23, 24 to a series of telephones forming demand entities 30 which comprises a full switchboard and single subscriber lines 31, 32, 33 and 34. Each of the demand entities will have a unique demand identity, namely in this embodiment its calling number. Similarly each of the switches 1, 2 and 3 has its own demand identity. The switch 1 has connected thereto a controller 40 through a data link 41. The switches 2 and 3 can be connected to further demand entities not shown.

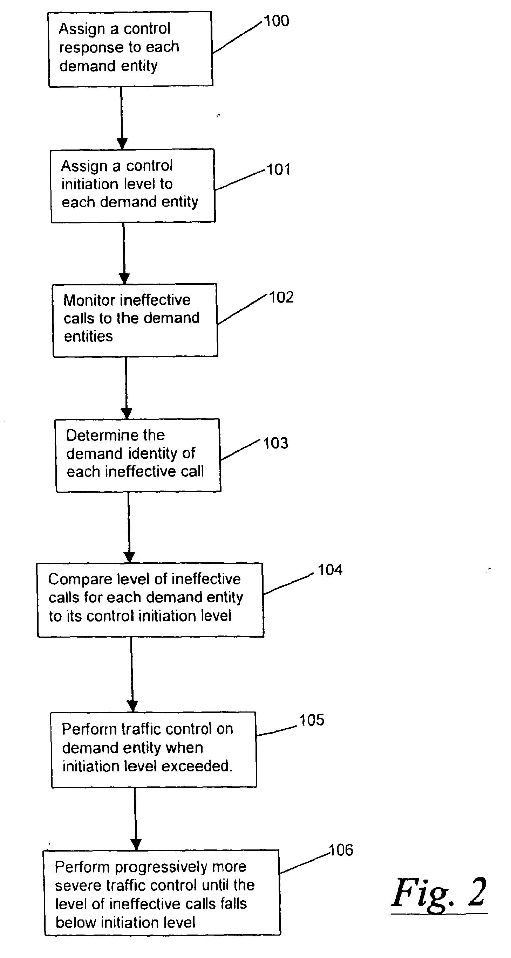

In operation and referring to Fig. 2 there is assigned a control response to each demand entity 30 to 34 inclusive. For example, the demand entity 30 could be a hospital in which case, it might have a priority ascribed to it such that a control would never be carried out on it. After a control response has been assigned to each demand entity as will be described in more detail below, a control initiation level is then assigned to each demand entity, namely the level of call failures i.e. ineffective calls not leading to a B-answer signal that would be allowed be delivered to the entity before some form of control or traffic calming is initiated. It will be appreciated that for the scope of this specification that ineffective traffic is defined as any call that is not connected, however, an aspect of the present invention is that ineffective traffic can be divided into subsets so that traffic calming is not initiated for every subset, for example, ring tone no reply, terminal not responding, etc. are subsets that might not need traffic calming to be implemented. The traffic calming might be for a particular demand entity, initiated when there was more than one call per 10 seconds being classified as a call failure. Then as the network operates each demand entity has its ineffective calls monitored so as to determine the demand entity of each ineffective call and these are compared with the level of ineffective calls for each demand entity to its control initiation limit. When the control initiation limit is exceeded, traffic calming or control is performed towards a demand entity. There is progressively more traffic control until the level of ineffective calls falls below the initiation level.

Referring now specifically to Fig. 2, there is a brief outline of the operation.

In step 100 there is assigned a controlled response to each demand entity in a network having a plurality of demand entities. Needless to say the term "network" here could refer to a sub-system within a network rather than simply the whole network itself, but the control according to the present invention will be exercised not alone on a network per se, but on subsets of the same network. In step 101 there is a control initiation level assigned to each demand entity. Then in step 102 the ineffective calls in the network are monitored. Then in step 103 is determined the demand identity for each ineffective call. In step 104 the level of ineffective calls for each demand entity is compared to its control initiation level and then in the event of the initiation level being exceeded there is performed in step 105 traffic control on the specific demand entity. Finally, in step 106 this traffic control is progressively made more severe until the level of ineffective calls falls below the initiation level for that specific demand entity.

The controller 40 initially configures the switching mode 1 with a measure of the accepted level of ineffective traffic for each particular demand entity. For example, the measure of the accepted level of ineffective traffic may be expressed as a leaky bucket. The data may include thresholds and hysteresis qualifiers, event generation timers, call failure selectivity qualifiers and so on. Additionally the controller may be programmed so as to initiate traffic calming when the overall level of traffic to the switching node 1 exceeds the predetermined level, in other words the traffic calming can be carried out not just simply on the demand entities 30 to 34, but also on the switch 1 itself.

It is important to appreciate that with this invention is not necessary to know the identity in advance of, for example, any of the demand entities 30 to 34, but simply to initiate the traffic calming procedures when one or other of the demand entities is quite clearly getting an unacceptable level of ineffective calls. The traffic calming or controlled response may include any of existing and known control responses, for example, percentage restriction may be specified in terms of simultaneous traffic capacity, initial levels of control response as mentioned above can be expressed as well as control increase levels, control abatement levels, timer for control abatement and so on.

In operation on an unannounced mass calling event in the network, the monitoring of the ineffective calling as mentioned above is performed automatically by simply sensing the number of call failures in the network and comparing them to the predefined parametric threshold data of the demand entity.

The manner of traffic control is to a large extent optional. Generally speaking the control event may be transmitted by the switch to the other switches 2 and 3 in the network and upwards so as to ensure that the traffic calming is initiated throughout the network. Alternatively, traffic calming may be initiated locally to the switch, for each traffic switch containing an instance of the traffic control.

Parametric data for control response may be defined towards particular destinations or groups of demand entities in a particular destination domain. The control response parametric data may include any of existing or known control responses, for example, percentage restriction. A feature of the present invention is that the control response may be based on a measure of simultaneous traffic capacity. Simultaneous traffic capacity is measured in Erlangs and specifies the simultaneous number of calls that are allowed towards the demand identity. Initial levels of control response may be expressed as well as control increase levels, control abatement levers and timers for control abatement. As has been indicated above it is desirable in certain circumstances to specifically exclude certain demand entities and thus the demand identity from the controlled response thus ensuring compliance with services agreements and for priority subscribers.

The system is configured by specifying general high-level demand identities for example geographical areas or groups of dial-up services that are prone to receiving a large number of calls at any one time. For each high-level demand identity, the user shall specify the acceptable call failure rate, and a specification of the restriction type that should be implemented in case of a problem being detected.

In use, when an unannounced mass calling occurs in a network the monitoring of ineffective calling is carried out automatically once the presence of call failures is detected directed first towards the high level demand identities in the network. In most situations the determination of a particular demand entity and thus its identity is only triggered when the unacceptable level of ineffective calling exists. This will be measured for example by a leaky bucket mechanism. Thus once the leaky bucket that is to say the number of ineffective calls is full or in effect when the number of ineffective calls exceeds the user specified limit for that demand entity, this will initiate an in-depth analysis of call failure. Immediately the subsequent call failures are identified, identifying the demand identities and thus locating the specific demand identities. For each call failure to a high-level demand identity, where the high-level demand identity is marked as problematic, the system shall automatically create a monitored object which relates to the address of the low-level demand identity, the dialed number, if such a monitored object does not already exist. The system shall calculate the call failure rate towards this monitored object again for example by a leaky bucket algorithm. If the call failure rate towards a monitored object is unacceptable, the system shall signal to a restriction module which initiates traffic calming towards the monitored object.

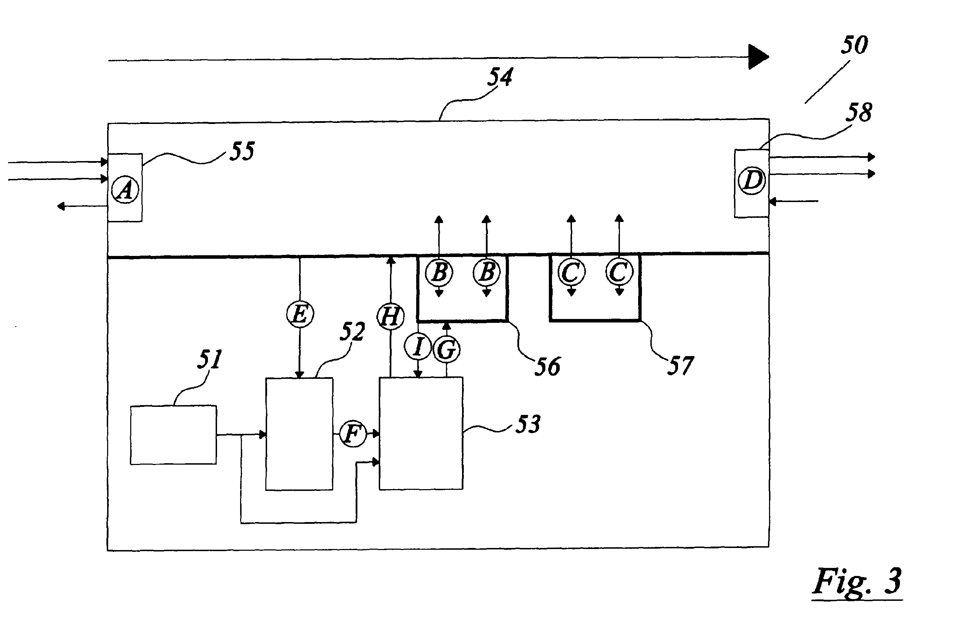

The traffic control event is carried out in real-time, as illustrated in Fig. 3.

Referring to Fig. 3, there is illustrated a switching node indicated generally by the reference numeral 50. The parametric data module 51 defines the threshold data for each demand entity and inputs this information to the DDOC monitor module 52 and a control module 53. A set-up logic controller 54 receives incoming events via an input interface 55. An event may be a voice call, data transmission or any type of telecommunication traffic. The set-up logic controller 54 is interfaced with a number analysis module 56, a routing analysis module 57 and an output interface module 58. These modules 56, 57 and 58 detect the number of call failures that will or might happen to individual destination entities downstream in the network. The DDOC monitor module 52 monitors the number of call or possible call failures. When the number of call failures reaches a certain level for a particular demand entity, the DDOC control module 53 is triggered to implement a control response that is broadcast locally or broadcast over the whole network. The circled letters in Fig. 3 identify the operations listed below.
A. Incoming access receives new calls/events.
B. Call/event setup logic interfaces to number analysis module. A possible result is failure, as well as other information to further process the call/event.
C. For outgoing events, routing analysis may take place. A possible result is failure.
D. Call/event is forwarded to outgoing access or terminating address. A possible result is failure, e.g. from the network or terminating access.
E. DDOC monitors call failures (excluding failures generated by DDOC control locally in switching centre).
F. DDOC generates an event when levels of call failure are unacceptable (determined by parametric data).
G. Trigger detection point inserted to number analysis for DDOC control local to DDOC monitoring (de-centralised DDOC).
H. DDOC event passed to call control setup logic for broadcast to the network (centralised DDOC). Instantiating trigger detection points throughout the network.
I. As a result of A and B, the DDOC trigger detection point activates an instance of DDOC control, resulting in traffic calming.

On receipt of additional call failures for a particular demand identity exceeding the user defined limit, a progressively more severe control response is applied until a level is attained where the system is managing the traffic flow at an acceptable level. This can be as in the embodiment described above carried out at a local level and if necessary can be transmitted to central networks to prevent, for example, incoming trunk calls to a particular network. The particular control event will depend entirely on the control that has been set for the particular demand identity.

The DDOC monitoring information can be stored in a database. Activity in the network such as when the ineffective traffic reaches a certain level can be recorded as event data. This event data can be used by other applications for example fault and management applications in the network. This is particularly advantageous for service providers who can use this data to improve the service level to their customers.

It is appreciated that the present invention may be carried out in a centralised or decentralised solution.

It is envisaged that a suitable control response abatement mechanism will be provided and can be, for example, determined by a timer mechanism. Thus, if no control event is received within the specified time interval greater than or equal to the timer the control response will abate by an amount that is equivalent to the parametric data entered initially for the called address domain.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail.

## Claims

1. A method of controlling randomly recurring call events in a communications network having a plurality of demand entities (30-34), each having a unique demand identity comprising the steps of:
continuously monitoring the level of ineffective traffic for each demand entity (30-34); and
initiating a traffic control response when the level of ineffective traffic for a demand entity exceeds a preset limit.

2. A method as claimed in claim 1 in which the traffic control response specifies the simultaneous number of calls towards the demand entity (30).

3. A method as claimed in claim 2 in which the simultaneous number of calls is measured in Erlang.

4. A method as claimed in claim 2 or 3 in which a dynamic traffic control response is exerted over time, matching a traffic profile of that demand identity.

5. A method as claimed in any preceding claim in which when the traffic control response of the demand entity is carried out in the network, the network in tum has a similar control operation performed on it by other networks using the networks unique demand identity with respect to another network.

6. A method as claimed in any preceding claim wherein the method further comprises the steps of assigning priority, to high-level demand entities (30-34) and monitoring first the high-level demand entities (30-34) for the level of ineffective traffic.

7. A method as claimed in any preceding claim in which when the level of ineffective traffic for a particular demand entity reaches a predefined level, a restriction module controls the rate at which calls are allocated to that demand entity.

8. A method as claimed in any preceding claim in which the monitoring means comprising storing event data obtained from the monitoring and allocating the event data for use in other applications.
